# EUROPEAN PATENT APPLICATION

(11) **EP 4 726 952 A1**
(43) Date of publication of application: **15.04.2026**
(21) Application number: 24818754.4
(22) Date of filing: 07.06.2024
(51) Int. Cl.: H02J 7/00, H02J 7/06, H02J 9/06, H02M 7/487

(54) **POWER SUPPLY CIRCUIT AND ENERGY STORAGE DEVICE**

(30) Priority: 07.06.2023 CN 202310674181
(71) Applicant: EcoFlow Inc., Shenzhen, Guangdong 518000 (CN)
(72) Inventor: TONG, Wenping, Shenzhen, Guangdong 518000 (CN); WU, Dong, Shenzhen, Guangdong 518000 (CN); CHEN, Xi, Shenzhen, Guangdong 518000 (CN); WANG, Lei, Shenzhen, Guangdong 518000 (CN)
(74) Representative: Appelt, Christian W.
(86) International application number: PCT/CN2024/097899
(87) International publication number: WO 2024/251223

(57) **Abstract**

A power supply circuit and an energy storage device are provided. The power supply circuit includes a DC/DC conversion module, a first AC/DC conversion module, a second AC/DC conversion module, an alternating current input interface, a first alternating current output interface, and a second alternating current output interface. A first end of the first AC/DC conversion module is connected to a battery module through the DC/DC conversion module, a first end of the second AC/DC conversion module is connected to the first end of the first AC/DC conversion module through a direct current bus, the first alternating current output interface is connected to a second end of the first AC/DC conversion module and a first terminal of the alternating current input interface, the second alternating current output interface is connected to a second end of the second AC/DC conversion module, both the first AC/DC conversion module and the second AC/DC conversion module may operate in a rectification mode or an inversion mode, and the DC/DC conversion module operates in a discharging mode or a charging mode.

## Description

### CROSS-REFERENCE TO RELATED APPLICATIONS

This application claims priority to Chinese Patent Application No. 202310674181.5, filed with the China National Intellectual Property Administration on June 7, 2023 and entitled "POWER SUPPLY CIRCUIT AND ENERGY STORAGE DEVICE", which is incorporated herein by reference in its entirety.

### TECHNICAL FIELD

This application relates to the field of power supply control technologies, and in particular, to a power supply circuit and an energy storage device.

### BACKGROUND

The descriptions herein merely provide background information related to this application, and do not necessarily constitute exemplary technologies.

An uninterruptible power supply (UPS) is usually disposed between a utility grid and an electrical load. An objective thereof is to improve quality of power supply to the load, and ensure normal operation of a load device when a fault of the utility grid occurs. A UPS mode may further be classified into an online UPS and a backup UPS. The online UPS may continue to supply power to the load to implement an uninterrupted output even if the online UPS is disconnected from the utility grid, and does not need to wait for a switching time. In this way, damage to the load can be reduced. The backup UPS needs to wait for the switching time when an outage of the utility grid occurs and a standby power supply is switched to. However, in the related technology, whether the online UPS or the backup UPS is provided on a device end, flexibility is poor and cannot meet users' requirements in different scenarios.

### SUMMARY

According to various embodiments of this application, this application provides a power supply circuit and an energy storage device.

This application provides a power supply circuit, including a DC/DC conversion module, a first AC/DC conversion module, a second AC/DC conversion module, an alternating current input interface, a first alternating current output interface, and a second alternating current output interface. The alternating current input interface is configured to be connected to an alternating current power supply. Both the first alternating current output interface and the second alternating current output interface are configured to be connected to an alternating current load. A first end of the DC/DC conversion module is configured to be connected to a battery module, and a second end of the DC/DC conversion module is connected to a first end of the first AC/DC conversion module through a direct current bus. A first end of the second AC/DC conversion module is further connected to the first end of the first AC/DC conversion module through the direct current bus. A neutral wire terminal of a second end of the first AC/DC conversion module is connected to a neutral wire terminal of a second end of the second AC/DC conversion module. A first terminal of the alternating current input interface is connected to a live wire terminal of the second end of the first AC/DC conversion module and a live wire terminal of the first alternating current output interface. A live wire terminal of the second alternating current output interface is connected to a live wire terminal of the second end of the second AC/DC conversion module. A second terminal of the alternating current input interface is connected to a neutral wire terminal of the second end of the first AC/DC conversion module and a neutral wire terminal of the second end of the second AC/DC conversion module, or the second terminal of the alternating current input interface is connected to the live wire terminal of the second alternating current output interface and the live wire terminal of the second end of the second AC/DC conversion module. The first AC/DC conversion module is configured to: in a rectification mode, convert an alternating current provided by the alternating current power supply into a direct current, and then output the direct current to the direct current bus; or in an inversion mode, convert a direct current on the direct current bus into an alternating current, and then supply power to the outside through the first alternating current output interface. The DC/DC conversion module is configured to: in a charging mode, perform voltage conversion on the direct current on the direct current bus, and then charge the battery module; or in a discharging mode, perform voltage conversion on a direct current outputted by the battery module, and then output the direct current to the direct current bus. The second AC/DC conversion module is configured to: in the inversion mode, convert the direct current on the direct current bus into the alternating current, and then supply power to the outside through the second alternating current output interface; or in the rectification mode, convert an alternating current inputted by the alternating current power supply into the direct current, and then output the direct current to the direct current bus.

This application further provides an energy storage device, including a battery module and the power supply circuit according to any one of the foregoing embodiments.

Details of one or more embodiments of this application are described in the accompanying drawings and the descriptions below. Other features, objects and advantages of this application are apparent from the descriptions, drawings and claims.

### BRIEF DESCRIPTION OF THE DRAWINGS

To describe the technical solutions of this application more clearly, the following briefly describes the accompanying drawings needed for describing the embodiments. It should be understood that the following accompanying drawings only show some embodiments of this application, so that it should not be construed as a limitation to the protection scope of this application. In the accompanying drawings, similar components are numbered similarly.
FIG. 1 is a circuit block diagram of a power supply circuit according to an embodiment of this application;
FIG. 2 is a diagram of an energy transmission path of a power supply circuit according to an embodiment of this application;
FIG. 3 is a diagram of an energy transmission path of a power supply circuit according to another embodiment of this application;
FIG. 4 is a diagram of an energy transmission path of a power supply circuit according to another embodiment of this application;
FIG. 5 is a diagram of an energy transmission path of a power supply circuit according to another embodiment of this application;
FIG. 6 is a diagram of an energy transmission path of a power supply circuit according to another embodiment of this application;
FIG. 7 is a diagram of an energy transmission path of a power supply circuit according to another embodiment of this application;
FIG. 8 is a circuit diagram of a bus capacitor module and a midpoint balance circuit module of a power supply circuit according to an embodiment of this application;
FIG. 9 is a schematic flowchart of a method for controlling a power supply circuit according to an embodiment of this application;
FIG. 10 is a structural block diagram of an energy storage device according to an embodiment of this application; and
FIG. 11 is a structural block diagram of a control apparatus according to an embodiment of this application.

### DETAILED DESCRIPTION

The following describes the technical solutions in embodiments of this application with reference to the accompanying drawings in embodiments of this application. The described embodiments are only some of the embodiments of this application rather than all of the embodiments.

It should be noted that, when a component is considered to be "connected to" another component, the component may be directly connected to the another component or an intermediate component may exist simultaneously. When a component is considered to be "disposed on" another component, the component may be directly disposed on the another component or an intermediate component may exist simultaneously. The terms "top", "bottom", "upper", "lower", "left", "right", "front", "rear", and similar expressions used in this specification are merely used for an illustrative purpose.

Unless otherwise defined, meanings of all technical and scientific terms used in this specification are the same as those usually understood by a person skilled in the art to which this application belongs. In the present disclosure, the terms used in the specification of this application are merely intended to describe specific embodiments, but are not intended to limit this application.

The following describes some embodiments with reference to the accompanying drawings. In a case of no conflict, the following embodiments and features of the embodiments may be combined with each other.

An uninterruptible power supply (UPS) is usually disposed between a utility grid and an electrical load. An objective thereof is to improve quality of power supply to the load, and ensure normal operation of a load device when a fault of the utility grid occurs. A UPS mode may further be classified into an online UPS and a backup UPS. The online UPS may continue to supply power to the load to implement an uninterrupted output even if the online UPS is disconnected from the utility grid, and does not need to wait for a switching time. In this way, damage to the load can be reduced. The backup UPS needs to wait for the switching time when an outage of the utility grid occurs and a standby power supply is switched to. However, in the related technology, whether the online UPS or the backup UPS is provided on a device end, flexibility is poor and cannot meet users' requirements in different scenarios.

Based on this, this application provides a power supply circuit, which can satisfy users' requirements in different scenarios.

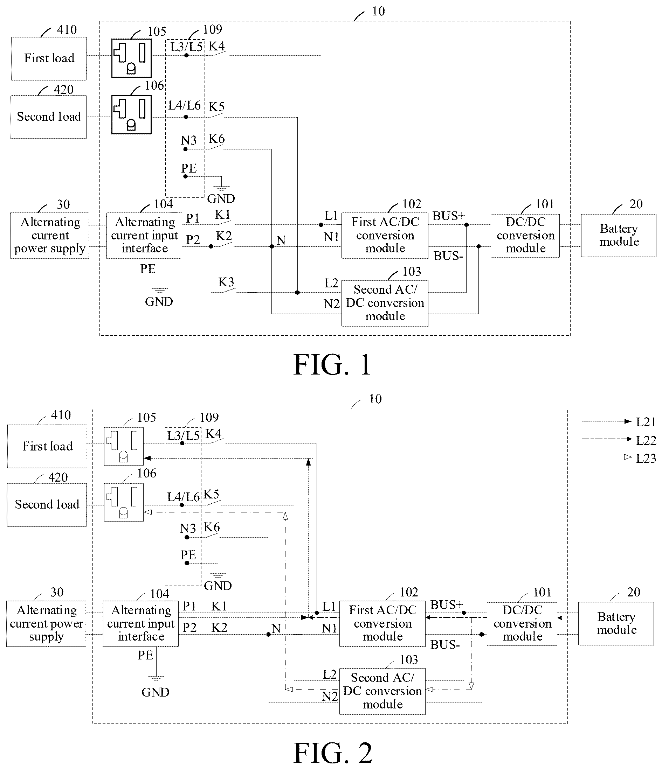

Referring to FIG. 1, FIG. 1 is a schematic diagram of a power supply circuit 10 according to an embodiment of this application. The power supply circuit 10 may be used in an energy storage device, a power supply device (such as an uninterruptible power supply), another electronic device in which a rechargeable battery is disposed, or the like. Using the energy storage device as an example, the power supply circuit 10 is disposed, so that the energy storage device may obtain electric energy from the outside, for example, obtain electric energy from a grid, a generator, or an energy storage apparatus connected to the power supply device, and output an alternating current to the outside. The energy storage device may further store the obtained electric energy to a rechargeable battery in the energy storage device.

In some embodiments, the power supply circuit 10 includes a DC/DC conversion module 101, a first AC/DC conversion module 102, a second AC/DC conversion module 103, an alternating current input interface 104, a first alternating current output interface 105, and a second alternating current output interface 106.

Specifically, the alternating current input interface 104 is configured to be connected to an alternating current power supply 30. Both the first alternating current output interface 105 and the second alternating current output interface 106 are configured to be connected to an alternating current load. The alternating current load includes a first load 410 and a second load 420. A first end of the DC/DC conversion module 101 is configured to be connected to a battery module 20. A second end of the DC/DC conversion module 101 is connected to a first end of the first AC/DC conversion module 102 through a direct current bus (a positive direct current bus BUS+ and a negative direct current bus BUS-). A first end of the second AC/DC conversion module 103 is further connected to the first end of the first AC/DC conversion module 102 through the direct current bus (the positive direct current bus BUS+ and the negative direct current bus BUS-). A neutral wire terminal N1 of a second end of the first AC/DC conversion module 102 is connected to a neutral wire terminal N2 of a second end of the second AC/DC conversion module 103. A first terminal P1 of the alternating current input interface 104 is connected to a live wire terminal L1 of the second end of the first AC/DC conversion module 102 and a live wire terminal L3 of the first alternating current output interface 105. A live wire terminal L4 of the second alternating current output interface 106 is connected to a live wire terminal L2 of the second end of the second AC/DC conversion module 103. A second terminal P2 of the alternating current input interface 104 is connected to the neutral wire terminal N1 of the second end of the first AC/DC conversion module 102 and the neutral wire terminal N2 of the second end of the second AC/DC conversion module 103. Alternatively, the second terminal P2 of the alternating current input interface 104 is connected to the live wire terminal L4 of the second alternating current output interface 106 and the live wire terminal L2 of the second end of the second AC/DC conversion module 103.

In this application, the DC/DC conversion module 101 is configured to: in a charging mode, perform voltage conversion on the direct current on the direct current bus, and then charge the battery module 20; or in a discharging mode, perform voltage conversion on a direct current outputted by the battery module 20, and then output the direct current to the direct current bus.

It may be understood that, the DC/DC conversion module 101 may use an existing LLC circuit. Alternatively, the DC/DC conversion module 101 may include a BUCK circuit, a BOOST circuit, and a driving circuit. In this way, a switch logic and a duty cycle of the BUCK circuit and the BOOST circuit are controlled by using the driving circuit, so that the DC/DC conversion module 101 may be controlled to operate in the charging mode or the discharging mode, and a conversion voltage of the DC/DC conversion module 101 may be controlled.

The first AC/DC conversion module 102 is configured to: in a rectification mode, convert an alternating current provided by the alternating current power supply 30 into a direct current, and then output the direct current to the direct current bus; or in an inversion mode, convert a direct current on the direct current bus into an alternating current, and then supply power to the first load 410 connected to the first alternating current output interface 105.

The second AC/DC conversion module 103 is configured to: in the inversion mode, convert the direct current on the direct current bus into the alternating current, and then output the alternating current to the second alternating current output interface 106, to supply power to the second load 420 connected to the second alternating current output interface 106; or in the rectification mode, convert an alternating current inputted by the alternating current power supply 30 into the direct current, and then output the direct current to the direct current bus.

Both the first AC/DC conversion module 102 and the second AC/DC conversion module 103 may be bidirectional AC/DC conversion circuits, that is, may implement inversion and rectification functions by using the same circuit. It may be understood that, both the first AC/DC conversion module 102 and the second AC/DC conversion module 103 may include a rectification circuit and an inversion circuit. A switch logic and a duty cycle of the rectification circuit and the inversion circuit are controlled, to implement mode switching between the rectification mode and the inversion mode of the first AC/DC conversion module 102 and the second AC/DC conversion module 103, and implement control of an output voltage. It may be understood that, the first AC/DC conversion module 102 and the second AC/DC conversion module 103 may use an existing AC/DC conversion circuit. This is not limited herein.

The first AC/DC conversion module 102 and the second AC/DC conversion module 103 may respectively operate in different modes, and the first AC/DC conversion module 102 and the second AC/DC conversion module 103 may alternatively operate in the rectification mode or the inversion mode at the same time.

In some embodiments, the first terminal P1 of the alternating current input interface 104 is the live wire terminal, and the second terminal P2 of the alternating current input interface 104 is the neutral wire terminal. In other embodiments, both the first terminal P1 and the second terminal P2 of the alternating current input interface 104 are the live wire terminals.

The alternating current input interface 104 further includes a ground terminal PE. The ground terminal PE is connected to the ground, and is configured to protect the alternating current input interface 104.

The neutral wire terminal N1 of the second end of the first AC/DC conversion module 102 and the neutral wire terminal N2 of the second end of the second AC/DC conversion module 103 are connected to form a node N. In some embodiments, the neutral wire terminal is further disposed on the first alternating current output interface 105 and the second alternating current output interface 106 respectively. In addition, both the neutral wire terminals of the first alternating current output interface 105 and the second alternating current output interface 106 are connected to the node N and the ground.

The battery module 20 may include a single battery pack or a plurality of battery packs. The plurality of battery packs may be connected in series, or may be connected in parallel. This is not limited in this application. Each battery pack includes a plurality of cells connected in series and parallel.

The alternating current power supply 30 is configured to provide the alternating current. The alternating current power supply 30 may be a utility grid, or may be a power supply having an alternating current output capability, such as a battery or a generator.

In some embodiments, the power supply circuit 10 further includes a switch module. The switch module includes an input switch unit. The input switch unit is configured to implement a connection between the alternating current input interface 104 and other modules in the power supply circuit 10. The input switch unit includes a first switch K1, a second switch K2, and a third switch K3. The first terminal P1 of the alternating current input interface 104 is connected to the live wire terminal L1 of the second end of the first AC/DC conversion module 102 and the live wire terminal L3 of the first alternating current output interface 105 through the first switch K1. The second terminal P2 of the alternating current input interface 104 is connected to the neutral wire terminal N1 of the second end of the first AC/DC conversion module 102 and the neutral wire terminal N2 of the second end of the second AC/DC conversion module 103 through the second switch K2. The second terminal P2 of the alternating current input interface 104 is further connected to the live wire terminal L2 of the second end of the second AC/DC conversion module 103 and the live wire terminal L4 of the second alternating current output interface 106 through the third switch K3.

Therefore, a connection relationship of the second terminal of the alternating current input interface 104 may be implemented by controlling the second switch K2 and the third switch K3 to be turned on or turned off. For example, when the second switch K2 is turned on and the third switch K3 is turned off, in this case, the second terminal P2 of the alternating current input interface 104 is connected to the neutral wire terminal N1 of the second end of the first AC/DC conversion module 102 and the neutral wire terminal N2 of the second end of the second AC/DC conversion module 103. When the second switch K2 is turned off and the third switch K3 is turned on, in this case, the second terminal P2 of the alternating current input interface 104 is connected to the live wire terminal L2 of the second end of the second AC/DC conversion module 103.

In some embodiments, the switch module includes an output switch unit. The output switch unit is configured to implement a connection between the alternating current output interface and other modules in the power supply circuit 10. The output switch unit includes a fourth switch K4 and a second switch K5. Specifically, the live wire terminal L3 of the first alternating current output interface 105 is connected to the live wire terminal L1 of the second end of the first AC/DC conversion module 102 through the fourth switch K4. The live wire terminal L4 of the second alternating current output interface 106 is connected to the live wire terminal L2 of the second end of the second AC/DC conversion module 103 through the fifth switch K5.

It may be understood that, the input switch unit is disposed in the power supply circuit 10, so that when the power supply circuit 10 or the load is abnormal, a corresponding switch in the switch module may be turned off in time, thereby reducing a security risk of the power supply circuit 10. In addition, it may be convenient for the power supply circuit 10 to flexibly adjust a connection manner of the second terminal of the alternating current input interface 104 and a connection manner of the alternating current output interface when responses to different load power requirements or different receive power, thereby satisfying application of the power supply circuit 10 in multi-scenarios.

The power supply circuit 10 further includes a control module (not shown in the figure). The control module is configured to control the first AC/DC conversion module 102, the second AC/DC conversion module 103, the DC/DC conversion module 101, and the switch module, to control each module to switch to a corresponding operating mode and control each switch in the switch module to be turned on or turned off.

Further, the control module is further configured to obtain input power of the alternating current input interface 104, first required power of the first load 410, second required power of the second load 420, and minimum charging power of the battery module 20. Further, the control module calculates a total required power based on the first required power, the second required power, and the minimum charging power.

Specifically, an operating principle of the power supply circuit 10 is as follows.

When it is detected that the alternating current power supply 30 is connected to the alternating current input interface 104, and the input power of the alternating current input interface 104 is less than or equal to a preset power threshold, or an input voltage of the alternating current input interface 104 is less than or equal to a preset voltage threshold, it may be determined that the first terminal P1 of the current alternating current input interface 104 is connected to a live wire terminal of the alternating current power supply, and the second terminal P2 is connected to a neutral wire terminal N of the alternating current power supply. Therefore, the first switch K1 and the second switch K2 are controlled to be turned on, and the third switch K3 is controlled to be turned off, so that the first terminal P1 is used as the live wire terminal, and the second terminal P2 is used as the neutral wire terminal, to receive electric energy inputted by the alternating current power supply 30. For example, in some embodiments, when an input voltage of the alternating current power supply 30 is less than or equal to 145V, the control module controls the first switch K1 and the second switch K2 to be turned on, so that the first terminal P1 of the alternating current input interface 104 is used as the live wire terminal, and the second terminal P2 is used as the neutral wire terminal.

Referring to FIG. 2, in an embodiment, when both the first switch K1 and the second switch K2 are turned on, and the third switch K3 is turned off, a connection relationship between the alternating current input interface 104 and other parts is shown in FIG. 2. In this case, the second terminal P2 of the alternating current input interface 104 is connected to the neutral wire terminal N1 of the second end of the first AC/DC conversion module 102 and the neutral wire terminal N2 of the second end of the second AC/DC conversion module 103, the first terminal P1 of the alternating current input interface 104 is used as the live wire terminal, and the second terminal P2 of the alternating current input interface 104 is used as the neutral wire terminal. In this way, when the alternating current input interface 104 is connected to the alternating current power supply 30, the alternating current input interface 104 receives the alternating current inputted by the alternating current power supply 30, and the first terminal P1 of the alternating current input interface 104 directly outputs the alternating current to supply power to the first load 410 connected to the first alternating current output interface 105 (referring to path L21), that is, in this case, only the first terminal P1 has a power input.

It may be understood that, when the first terminal P1 of the alternating current input interface 104 has an alternating current input, and corresponding input power is less than or equal to the total required power, input power of the alternating current power supply 30 is insufficient to supply power to the load. The total required power is equal to a sum of all connected loads and the minimum charging power needed for charging the battery module 20. In this embodiment, the total required power is equal to a sum of the first load 410, the second load 420, and the minimum charging power of the battery module 20. In this case, the battery module 20 further needs to supply power to the load. Therefore, the first AC/DC conversion module 102 is controlled to operate in the inversion mode, and the DC/DC conversion module 101 is controlled to operate in the discharging mode. In this way, the DC/DC conversion module 101 performs voltage conversion on the direct current outputted by the battery module 20, to output a direct current having preset power through the direct current bus. The first AC/DC conversion module 102 converts the direct current on the direct current bus into the alternating current, and then supplies power to the first load 410 connected to the first alternating current output interface 105 (referring to path L22). In addition, the second AC/DC conversion module 103 operates in the inversion mode, converts the direct current on the direct current bus into the alternating current, and then supplies power to the second load 420 connected to the second alternating current output interface 106 (referring to path L23).

It may be understood that, in the embodiment shown in FIG. 2, when it is detected that the alternating current power supply 30 is disconnected, although the first AC/DC conversion module 102 always operates in the inversion mode, the first AC/DC conversion module 102 further needs to be controlled to switch from an inverted current source mode to an inverted voltage source mode. In this case, a certain switching time is needed. Therefore, in this scenario, the first alternating current output interface 105 functions as a backup UPS. The second alternating current output interface 106 does not need to perform state switching, the second alternating current output interface 106 does not need the switching time, and the second alternating current output interface 106 functions as an online UPS, thereby providing both the online UPS and the backup UPS, to satisfy the usage requirements of different loads of a user. When only the first terminal P1 of the alternating current input interface 104 has the power input, the second AC/DC conversion module 103 always operates in the inversion mode, and mode switching is not required. In this way, even if the alternating current input interface 104 is disconnected from the alternating current power supply 30, the second alternating current output interface 106 connected to the second AC/DC conversion module 103 may always maintain uninterrupted output to the second load 420, that is, zero-second switching is implemented. In other words, the second alternating current output interface 106 is the online UPS in the power supply circuit 10.

The first AC/DC conversion module 102 needs to perform corresponding mode switching based on whether the battery module 20 supplies power to the load. In this way, for the first alternating current output interface 105 connected to the first AC/DC conversion module 102, when the first AC/DC conversion module 102 performs mode switching, a mode switching duration exists. In other words, the first alternating current output interface 105 functions as a backup UPS interface in the power supply circuit 10.

In this way, according to the power supply circuit 10 provided in this application, an online UPS interface and a backup UPS interface may be provided in a same power supply circuit 10 for the user to select, which not only can satisfy power consumption requirements in different scenarios, but also circuit costs are low.

In addition, in the embodiment shown in FIG. 2, the battery module 20 and the alternating current power supply 30 together supply power to the load, thereby ensuring that output power of the power supply circuit 10 is not limited by wall outlet power. In other words, even if the output power is limited by the wall outlet power, only maximum input, for example, 1800W can be inputted to the alternating current input interface 104, and an insufficient part can be supplemented by the battery module 20, so that the output power of the power supply circuit 10 is not affected by power limitation.

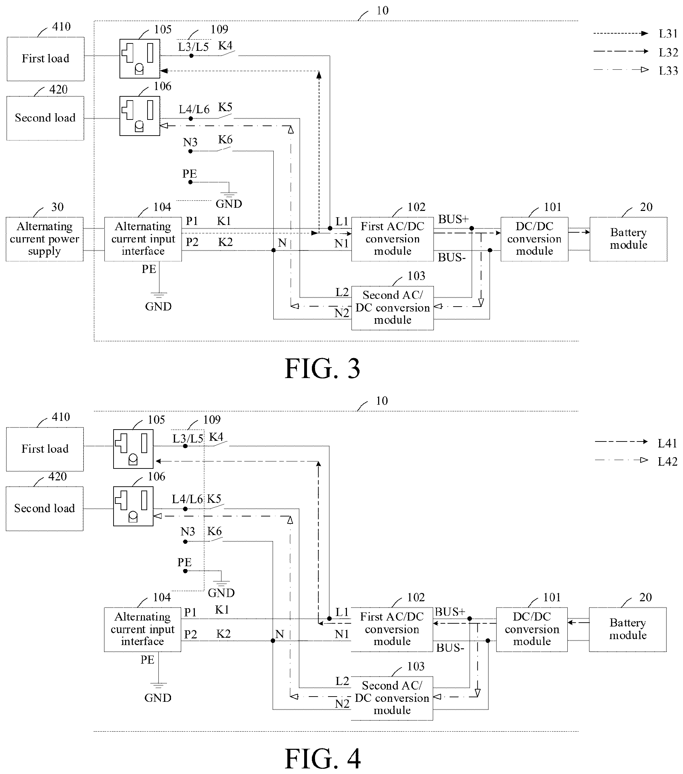

Referring to FIG. 3, in an embodiment, when both the first switch K1 and the second switch K2 are turned on, and the third switch K3 is turned off, a connection relationship between the alternating current input interface 104 and other parts is shown in FIG. 3. In this case, the second terminal of the alternating current input interface 104 is connected to the neutral wire terminal N1 of the second end of the first AC/DC conversion module 102 and the neutral wire terminal N2 of the second end of the second AC/DC conversion module 103, the first terminal P1 of the alternating current input interface 104 is used as the live wire terminal, and the second terminal P2 of the alternating current input interface 104 is used as the neutral wire terminal. In this way, when the alternating current input interface 104 is connected to the alternating current power supply 30, the first terminal P1 of the alternating current input interface 104 directly outputs the alternating current to supply power to the first load 410 connected to the first alternating current output interface 105 (referring to path L31).

It may be understood that, when the first terminal P1 of the alternating current input interface 104 has the alternating current input and the corresponding input power is greater than the total required power, and when the input power of the alternating current input interface 104 is sufficient to satisfy load requirements, and some power may be used to supply power to the battery module 20, the first AC/DC conversion module 102 is controlled to operate in the rectification mode, and the DC/DC conversion module 101 is controlled to operate in the charging mode. In this way, after the first terminal P1 of the alternating current input interface 104 further outputs the alternating current to the first AC/DC conversion module 102, the first AC/DC conversion module 102 converts the alternating current into the direct current, and outputs the direct current to the DC/DC conversion module 101 through the direct current bus. The DC/DC conversion module 101 performs voltage conversion on the direct current on the direct current bus, to charge the battery module 20 (referring to path L32).

In addition, the second AC/DC conversion module 103 operates in the inversion mode, converts the direct current on the direct current bus into the alternating current, and then supplies power to the second load 420 connected to the second alternating current output interface 106 (referring to path L33).

Similarly, in an embodiment shown in FIG. 3, the first alternating current output interface 105 serves as the backup UPS in the power supply circuit 10, and the second alternating current output interface 106 serves as the online UPS in the power supply circuit 10.

Referring to FIG. 4, in an embodiment, when both the first switch K1 and the second switch K2 are turned on, and the third switch K3 is turned off, a connection relationship between the alternating current input interface 104 and other parts is shown in FIG. 4. In this case, the second terminal of the alternating current input interface 104 is connected to the neutral wire terminal N1 of the second end of the first AC/DC conversion module 102 and the neutral wire terminal N2 of the second end of the second AC/DC conversion module 103, and the alternating current input interface 104 is disconnected from the alternating current power supply 30. In this case, both the first AC/DC conversion module 102 and the second AC/DC conversion module 103 are controlled to operate in the inversion mode, and the DC/DC conversion module 101 is controlled to operate in the discharging mode. In this way, the DC/DC conversion module 101 performs voltage conversion on the direct current outputted by the battery module 20, to output the direct current through the direct current bus. The first AC/DC conversion module 102 converts the direct current on the direct current bus into the alternating current, and then transmits the alternating current to the first alternating current output interface 105, to supply power to the first load 410 (referring to path L41). In addition, the second AC/DC conversion module 103 converts the direct current on the direct current bus into the alternating current, and then transmits the alternating current to the second alternating current output interface 106, to supply power to the second load 420 (referring to path L42).

When it is detected that the alternating current power supply 30 is connected to the alternating current input interface 104, and the input power of the alternating current input interface 104 is higher than the preset power threshold, or the input voltage of the alternating current input interface 104 is higher than the preset voltage threshold, it indicates that in this case, both the first terminal P1 and the second terminal P2 of the alternating current input interface 104 have the power input. When the first terminal P1 and the second terminal P2 of the alternating current input interface 104 have an in-phase alternating current input, the total input power is higher than the preset power threshold. The preset power threshold may be a power critical threshold between a single-phase alternating current input and a two-phase alternating current input. If the input power is lower than the preset power threshold, it may be determined that the alternating current is inputted in a single phase, that is, power is inputted only through the first terminal P1. If the input power is higher than the preset power threshold, it indicates that both the first terminal P1 and the second terminal P2 have the power input. When the alternating current input interface 104 inputs a split-phase alternating current, that is, the first terminal P1 and the second terminal P2 input the split-phase alternating current (for example, an alternating current whose phase difference is 180), in this case, the input voltage of the alternating current input interface 104 is higher than the preset voltage threshold. Similarly, the preset voltage threshold may also be set based on situations of inputting the in-phase alternating current and the split-phase alternating current. Further, when the input voltage is lower than the preset voltage threshold, it may be determined that an in-phase alternating current is inputted. In this case, the alternating current may be inputted in a single phase or a dual phase. When the input voltage is higher than the preset voltage threshold, it may be determined that a split-phase alternating current is inputted. No matter the in-phase alternating current or the split-phase alternating current is inputted, in this case, both the first terminal P1 and the second terminal P2 have the alternating current input.

In this way, the first switch K1 and the third switch K3 are controlled to be turned on, so that the first terminal P1, and the second terminal P2 are together used as the live wire terminals, to provide more electric energy. For example, when the input voltage of the alternating current power supply 30 is higher than 145V, for example, 170V, the control module controls the first switch K1 and the third switch K3 to be turned on, so that both the first terminal P1 and the second terminal P2 of the alternating current input interface 104 are used as the live wire terminals.

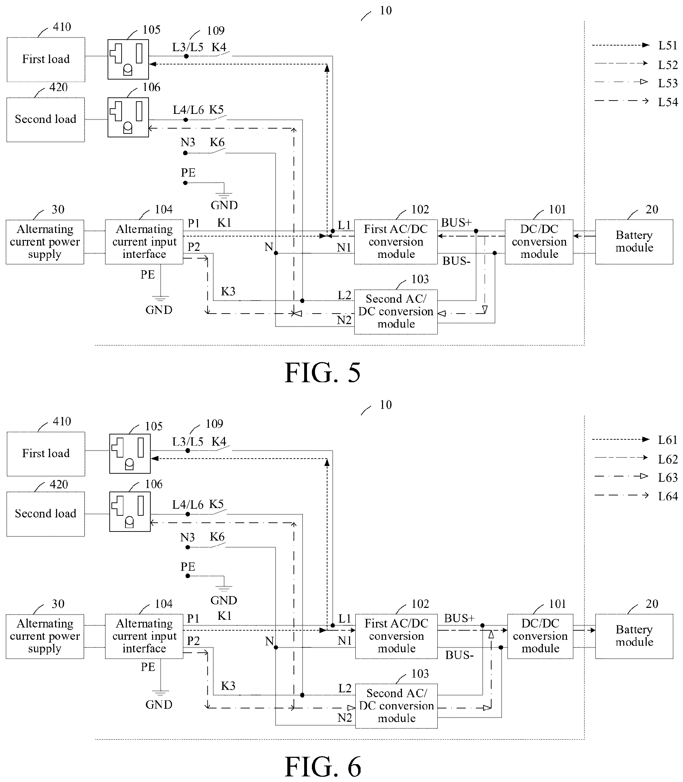

Referring to FIG. 5, in an embodiment, when both the first switch K1 and the third switch K3 are turned on, and the second switch K2 is turned off, a connection relationship between the alternating current input interface 104 and other parts is shown in FIG. 5. In this case, the second terminal P2 of the alternating current input interface 104 is connected to the live wire terminal L4 of the second alternating current output interface 106 and the live wire terminal L2 of the second end of the second AC/DC conversion module 103. Both the first terminal P1 and the second terminal P2 of the alternating current input interface 104 are used as the live wire terminals. In this way, when the alternating current input interface 104 is connected to the alternating current power supply 30, and both the first terminal P1 and the second terminal P2 have the alternating current input, the alternating current input interface 104 receives the alternating current inputted by the alternating current power supply 30, the first terminal P1 of the alternating current input interface 104 outputs the alternating current to the first alternating current output interface 105 (referring to path L51), and the second terminal P2 outputs the alternating current to the second alternating current output interface 106 (referring to path L54).

It may be understood that, when input power of the first terminal P1 of the alternating current input interface 104 is less than a sum of the first required power and the minimum charging power, or input power of the second terminal P2 of the alternating current input interface 104 is less than a sum of the second required power and the minimum charging power, the input power of the alternating current power supply 30 is insufficient to supply power to the load. The first required power is required power of the first load, and the second required power is required power of the second load. In this case, the battery module 20 further needs to supply power to the load. Therefore, both the first AC/DC conversion module 102 and the second AC/DC conversion module 103 are controlled to operate in the inversion mode, and the DC/DC conversion module 101 is controlled to operate in the discharging mode. In this way, the DC/DC conversion module 101 performs voltage conversion on the direct current outputted by the battery module 20, to output the direct current having preset power through the direct current bus. The first AC/DC conversion module 102 converts the direct current on the direct current bus into the alternating current, and then transmits the alternating current to the first alternating current output interface 105 (referring to path L52). In this way, the first terminal P1 of the alternating current input interface and the first AC/DC conversion module 102 simultaneously output the alternating current to supply power to the first load 410 connected to the first alternating current output interface 105. In addition, the second AC/DC conversion module 103 operates in the inversion mode, converts the direct current on the direct current bus into the alternating current, and then transmits the alternating current to the second alternating current output interface 106 (referring to path L53). In this way, the second terminal P2 of the alternating current input interface and the second AC/DC conversion module 103 simultaneously output the alternating current to supply power to the second load 420 connected to the second alternating current output interface 106.

Clearly, according to the power supply circuit 10 provided in this application, the first AC/DC conversion module 102 and the second AC/DC conversion module 103 are disposed in the power supply circuit 10, and the first end of the first AC/DC conversion module 102 is connected to the battery module 20 through the DC/DC conversion module 101. The first end of the second AC/DC conversion module 103 is connected to the first end of the first AC/DC conversion module 102 through the direct current bus. The first alternating current output interface 105 is connected to the second end of the first AC/DC conversion module 102 and the first terminal P1 of the alternating current input interface 104. The second alternating current output interface 106 is connected to the second end of the second AC/DC conversion module 103. Both the first AC/DC conversion module 102 and the second AC/DC conversion module 103 may operate in the rectification mode or the inversion mode, and the DC/DC conversion module 101 may operate in the discharging mode or the charging mode. In this way, when the alternating current power supply 30 participates in operation, the second AC/DC conversion module 103 may convert the direct current outputted by the first AC/DC conversion module 102, to output the alternating current, so that the battery module 20 and the alternating current power supply 30 together supply power to the load, thereby ensuring that the output power of the power supply circuit 10 is not limited by the wall outlet power. In this way, the power supply circuit 10 provided in this application may further satisfy different power supply conditions of a plurality of countries and regions, and is more widely adaptable.

It may be understood that, in an embodiment shown in FIG. 5, when it is detected that the alternating current power supply 30 is disconnected, although the first AC/DC conversion module 102 and the second AC/DC conversion module 103 always operate in the inversion mode, the first AC/DC conversion module 102 and the second AC/DC conversion module 103 further need to be controlled to switch from the inverted current source mode to the inverted voltage source mode. In this case, a certain switching time is needed. In this case, both the first alternating current output interface 105 and the second alternating current output interface 106 function as backup UPSs.

Referring to FIG. 6, in an embodiment, when both the first switch K1 and the third switch K3 are turned on, and the second switch K2 is turned off, a connection relationship between the alternating current input interface 104 and other parts is shown in FIG. 6. In this case, when the second terminal P2 of the alternating current input interface 104 is connected to the live wire terminal L4 of the second alternating current output interface 106 and the live wire terminal L2 of the second end of the second AC/DC conversion module 103, both the first terminal P1 and the second terminal P2 of the alternating current input interface 104 are used as the live wire terminals. In this way, when the alternating current input interface 104 is connected to the alternating current power supply 30, and both the first terminal P1 and the second terminal P2 have the alternating current input, the alternating current input interface 104 receives the alternating current inputted by the alternating current power supply 30, the first terminal P1 of the alternating current input interface 104 outputs the alternating current to the first alternating current output interface 105 (referring to path L61), and the second terminal P2 outputs the alternating current to the second alternating current output interface 106 (referring to path L64).

It may be understood that, when the input power of the first terminal P1 of the alternating current input interface 104 is greater than the sum of the first required power and the minimum charging power, and the input power of the second terminal P2 of the alternating current input interface 104 is greater than the sum of the second required power and the minimum charging power, the input power of the alternating current input interface 104 is sufficient to satisfy a load requirement and some power may be used to supply power to the battery module 20. In this case, both the first AC/DC conversion module 102 and the second AC/DC conversion module 103 are controlled to operate in the rectification mode, and the DC/DC conversion module 101 is controlled to operate in the charging mode. In this way, after the first terminal P1 of the alternating current input interface 104 further outputs the alternating current to the first AC/DC conversion module 102, the first AC/DC conversion module 102 converts the alternating current of the second end into the direct current, and outputs the direct current to the DC/DC conversion module 101 through the direct current bus. The DC/DC conversion module 101 performs voltage conversion on the direct current on the direct current bus, to charge the battery module 20 (referring to path L62).

In addition, after the second terminal P2 of the alternating current input interface 104 further outputs the alternating current to the second AC/DC conversion module 103, the second AC/DC conversion module 103 converts the alternating current into the direct current, and outputs the direct current to the DC/DC conversion module 101 through the direct current bus. The DC/DC conversion module 101 performs voltage conversion on the direct current on the direct current bus, to charge the battery module 20 (referring to path L63).

It may be understood that, in the embodiment shown in FIG. 6, when it is detected that the alternating current power supply 30 is powered off, the first AC/DC conversion module 102 and the second AC/DC conversion module 103 further need to be controlled to switch from the rectification mode to the inversion mode. In this case, a certain switching time is needed. Therefore, in this scenario, both the first alternating current output interface 105 and the second alternating current output interface 106 function as backup UPSs.

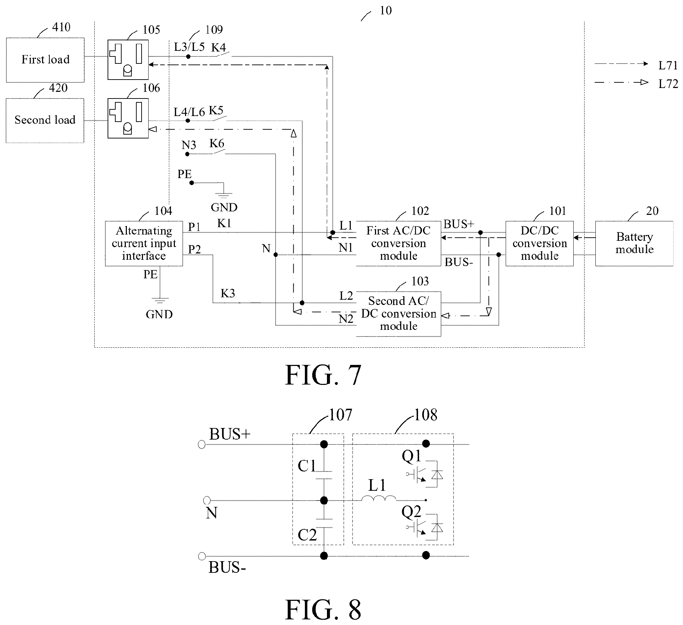

Referring to FIG. 7, in an embodiment, when both the first switch K1 and the third switch K3 are turned on, and the second switch K2 is turned off, a connection relationship between the alternating current input interface 104 and other parts is shown in FIG. 7. In this case, the second terminal P2 of the alternating current input interface 104 is connected to the live wire terminal L4 of the second alternating current output interface 106 and the live wire terminal L2 of a second end of the second AC/DC conversion module 103, and the alternating current input interface 104 is disconnected from the alternating current power supply 30, that is, the alternating current is powered off. In this way, in the power supply circuit 10, only the battery module 20 supplies power to the load. Therefore, both the first AC/DC conversion module 102 and the second AC/DC conversion module 103 need to be controlled to operate in the inversion mode, and the DC/DC conversion module 101 needs to be controlled to operate in the discharging mode. In this way, the DC/DC conversion module 101 performs voltage conversion on the direct current outputted by the battery module 20, to output the direct current through the direct current bus. The first AC/DC conversion module 102 converts the direct current on the direct current bus into the alternating current, and then transmits the alternating current to the first alternating current output interface 105, to supply power to the first load 410 (referring to path L71). In addition, the second AC/DC conversion module 103 converts the direct current on the direct current bus into the alternating current, and then transmits the alternating current to the second alternating current output interface 106, to supply power to the second load 420 (referring to path L72).

When the alternating current received by the first terminal P1 and the second terminal P2 of the alternating current input interface 104 is the in-phase alternating current, and in this case, the first switch K1 and the third switch K3 are turned on, and the second switch K2 is turned off, the first alternating current output interface 105 and the second alternating current output interface 106 output the in-phase alternating current in a UPS mode. Conversely, if the alternating current received by the first terminal P1 and the second terminal P2 of the alternating current input interface 104 is the split-phase alternating current, and in this case, the first switch K1 and the third switch K3 are turned on, and the second switch K2 is turned off, the first alternating current output interface 105 and the second alternating current output interface 106 output an alternating current in different phases in the UPS mode. In another embodiment, when an outage of the utility grid occurs, the first AC/DC conversion module 102 and the second AC/DC conversion module 103 may also be controlled, to control the phase of the alternating current outputted by the first alternating current output interface 105 and the second alternating current output interface 106.

In addition, in embodiments shown in FIG. 5, FIG. 6, and FIG. 7, the first alternating current output interface 105 and the second alternating current output interface 106 of the power supply circuit 10 may output the split-phase alternating current. For example, in some embodiments, a voltage of 120V may be outputted between the live wire terminal L3 and the neutral wire terminal N3 of the first alternating current output interface 105, a voltage of 120V may be outputted between the live wire terminal L4 and the neutral wire terminal N4 of the second alternating current output interface 106, and a voltage of 240V may further be outputted between the live wire terminal L3 of the first alternating current output interface 105 and the live wire terminal L4 of the second alternating current output interface 106.

In this way, according to the power supply circuit 10 provided in this application, when in the foregoing embodiments shown in FIG. 5, FIG. 6, and FIG. 7, the first terminal P1 and the second terminal P2 of the alternating current input interface 104 simultaneously output the alternating current, so that a larger load power requirement can be satisfied, and the power supply circuit 10 has richer use scenarios.

It may be understood that, in this application, the switch in the switch module may include, but is not limited to, a relay, an MOS tube, a triode, or another switch device that can be turned on and turned off. A specific form of each switch is not limited in this application.

Referring to FIG. 8, in some embodiments, the power supply circuit 10 further includes a bus capacitor module 107 and a midpoint balance circuit module 108. Specifically, the bus capacitor module 107 includes a first bus capacitor C1 and a second bus capacitor C2. The first bus capacitor C1 and the second bus capacitor C2 are connected in series on the direct current bus (between the BUS+ and the BUS-). A midpoint of the first bus capacitor C1 and the second bus capacitor C2 is further connected to the neutral wire terminal of the first alternating current output interface 105 and the neutral wire terminal of the second alternating current output interface 106. In other words, the midpoint of the first bus capacitor C1 and the second bus capacitor C2 is connected to the node N (referring to FIG. 1). The node N is a connection point between the neutral wire terminal of the first alternating current output interface 105 and the neutral wire terminal of the second alternating current output interface 106.

The midpoint balance circuit module 108 includes a first inductor L1, a first switch tube Q1, and a second switch tube Q2. A first end of the first switch tube Q1 is connected to the positive direct current bus BUS+, and a second end of the first switch tube Q1 is connected to a first end of the second switch tube Q2. A second end of the second switch tube Q2 is connected to the negative direct current bus BUS-. One end of the first inductor L1 is connected to the midpoint of the first bus capacitor C1 and the second bus capacitor C2, and the other end of the first inductor L1 is connected to the second end of the first switch tube Q1 and the first end of the second switch tube Q2. A third end of the first switch tube Q1 and a third end of the second switch tube Q2 are connected to the control module (not shown in the figure). The control module respectively drives the first switch tube Q1 and the second switch tube Q2 to be turned on or turned off through the third end of the first switch tube Q1 and the third end of the second switch tube Q2.

An operating principle of the midpoint balance circuit module 108 is approximately as follows.

When a voltage of the first capacitor C1 is greater than a voltage of the second capacitor C2, the control module first drives the first switch tube Q1 to be turned on and the second switch tube Q2 to be turned off. In this way, the first switch tube Q1, the first inductor L1, and the first capacitor C1 form a loop, so that the first inductor L1 stores energy, and a voltage of the first capacitor C1 decreases. Then, the control module drives the first switch tube Q1 to be turned off and the second switch tube Q2 to be turned on. In this way, the second switch tube Q1, the first inductor L1, and the second capacitor C2 form a loop, and the first inductor L1 performs freewheeling through the second switch tube Q2, and simultaneously charges the second capacitor C2, so that a voltage of the second capacitor C2 increases. In this way, a switch logic and a duty cycle of the first switch tube Q1 and the second switch tube Q2 are controlled, the capacitor of the first capacitor C1 and the second capacitor C2 may be finally made to be equal or substantially equal, so that a midpoint voltage of the bus capacitor module 107 is maintained to be balanced. Similarly, when a voltage of the first capacitor C1 is less than a voltage of the second capacitor C2, the switch logic and the duty cycle of the first switch tube Q1 and the second switch tube Q2 may also be controlled, so that the capacitor voltages of the first capacitor C1 and the second capacitor C2 are equal or substantially equal. Details are not described herein again.

It may be understood that, because there is a device and control deviation between the first AC/DC conversion module 102 and the second AC/DC conversion module 103, and unbalanced loads of the first load 410 and the second load 420 (that is, there is a deviation between the first required power of the first load 410 and the second required power of the second load 420), a voltage of the node N needs to be stabilized, to maintain voltage balance between the live wire terminal L3 and the neutral wire terminal N3 of the first alternating current output interface 105 and the live wire terminal L4 and the neutral wire terminal N4 of the second alternating current output interface 106. In some embodiments, when the loads of the first load 410 and the second load 420 are balanced, the switch logic and the duty cycle of the first AC/DC conversion module 102 and the second AC/DC conversion module 103 may be adjusted to stabilize a voltage on the node N and maintain voltage balance. In other embodiments, when the loads of the first load 410 and the second load 420 are unbalanced, midpoint voltage balance of the bus capacitor module 107 may be maintained through the midpoint balance circuit module 108, to stabilize a voltage of the node N, thereby maintaining voltage balance of the first alternating current output interface 105 and the second alternating current output interface 106.

In this embodiment, both the switch tube Q1 and the switch tube Q2 are triodes. The first ends of the first switch tube Q1 and the second switch tube Q2 are collectors, the second ends are emitters, and the third ends are bases. It may be understood that, in another embodiment, the first switch tube Q1 and the second switch tube Q2 may further be another switch device, for example, the MOS tube. A specific circuit of the midpoint balance circuit module 108 is not limited in this application, and in another embodiment, a person skilled in the art may replace the midpoint balance circuit module 108 with another midpoint balance circuit.

Referring to FIG. 1 again, in some embodiments, the power supply circuit 10 further includes a third alternating current output interface 109. A first live wire terminal L5 of the third alternating current output interface 109 is connected to the first terminal P1 of the alternating current input interface and the live wire terminal L1 of the second end of the first AC/DC conversion module 102, and a second live wire terminal L6 of the third alternating current output interface 109 is connected to the second terminal P2 of the alternating current input interface and the live wire terminal L2 of the second end of the second AC/DC conversion module 103. A neutral wire terminal N3 of the third alternating current output interface 109 is connected to the neutral wire terminal N1 of the second end of the first AC/DC conversion module 102 and the neutral wire terminal N2 of the second end of the second AC/DC conversion module 103 (that is, the neutral wire terminal of the third alternating current output interface 109 is connected to the node N). A ground terminal PE of the third alternating current output interface 109 is connected to the ground.

It may be understood that, when both the first switch K1 and the third switch K3 are turned on, and the second switch K2 is turned off, that is, the second terminal P2 of the alternating current input interface 104 is connected to the live wire terminal L2 of the second AC/DC conversion module 103, power may be supplied to a third load (not shown in the figure) connected to the third alternating current output interface 109 through the third alternating current output interface 109. The third alternating current output interface 109 may output the split-phase alternating current, that is, a voltage between the first live wire terminal L5 and the second live wire terminal L6 is twice a voltage of the first live wire terminal L5.

It may be understood that, an operating principle of the power supply circuit 10 supplying power to the third load through the third alternating current output interface 109 is approximately the same as or similar to the operating principle in the embodiments shown in FIG. 2 to FIG. 7. Details are not described herein again.

It may be understood that, in some embodiments, the power supply circuit 10 may be provided with at least one of the first alternating current output interface 105, the second alternating current output interface 106, and the third alternating current output interface 109, or a combination of any two or more of the first alternating current output interface 105, the second alternating current output interface 106, and the third alternating current output interface 109.

In some embodiments, the output switch unit further includes a sixth switch K6. The neutral wire terminal N3 of the third alternating current output interface 109 is connected to the node N through the sixth switch K6. The third alternating current output interface 109 shares the fourth switch K4 with the first alternating current output interface 105, and shares the fifth switch K5 with the second alternating current output interface 106.

It may be understood that, in another embodiment, the first live wire terminal L5 and the second live wire terminal L6 of the third alternating current output interface 109 may be respectively connected to the live wire terminal L1 of the second end of the first AC/DC conversion module 102 and the live wire terminal L2 of the second end of the second AC/DC conversion module 103 through another switch. In this way, the first alternating current output interface 105, the second alternating current output interface 106, and the third alternating current output interface 109 may be connected through respective switches.

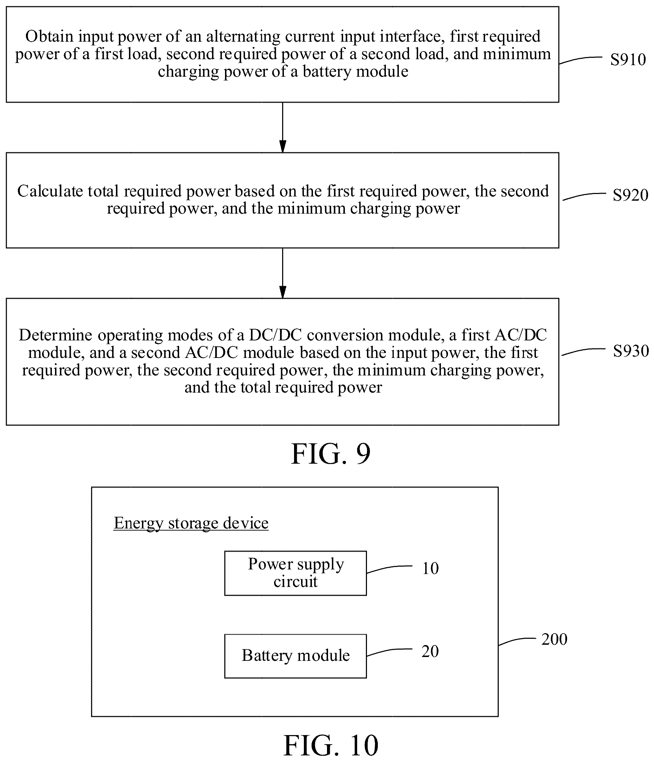

Referring to FIG. 9, FIG. 9 is a schematic flowchart of a method for controlling a power supply circuit 10 according to an embodiment of this application. It may be understood that, the control method may be performed by the control module of the power supply circuit 10. The control method includes:
Step S910: Obtain input power of an alternating current input interface, first required power of a first load, second required power of a second load, and minimum charging power of a battery module.

The input power refers to power inputted by the alternating current power supply 30 to the alternating current input interface 104. The first required power refers to required power of the first load, and the second required power refers to required power of the second load. The minimum charging power refers to charging power that can maintain a charging state of the battery module 20. In other words, when the DC/DC conversion module 101 operates in the charging mode, and power outputted by the DC/DC conversion module 101 to the battery module 20 is less than the minimum charging power, the battery module 20 cannot be charged.

The input power, the first required power, and the second required power may respectively change with changes of operating states of the alternating current power supply 30, the first load 410, and the second load 420.

In some embodiments, sampling circuits may be disposed on the alternating current input interface, the first alternating current output interface, and the second alternating current output interface, to sample a current and a voltage on the alternating current input interface, the first alternating current output interface, and the second alternating current output interface, thereby obtaining the input power of the alternating current input interface, the first required power, and the second required power.

In some embodiments, the power supply circuit 10 and the battery module 20 communicate with each other. In this way, the control module in the power supply circuit 10 may obtain a charging parameter such as the minimum charging power of the battery module 20 through communication with a BMS in the battery module 20. Similarly, in some embodiments, the power supply circuit 10 may also communicate with the alternating current power supply 30, the first load 410, and the second load 420, to obtain the input power, the first required power, and the second required power.

In other embodiments, the minimum charging power of the battery module 20 may alternatively be preset data preset in a memory. In this way, the control module may also obtain the minimum charging power by obtaining the preset data in the memory.

It may be understood that, a specific manner of obtaining the input power, the first required power, the second required power, and the minimum charging power is not limited in this application. A person skilled in the art may obtain the foregoing data in another manner.

Step S920: Calculate total required power based on the first required power, the second required power, and the minimum charging power.

In step S920, the total required power may be a sum of the first required power, the second required power, and the minimum charging power. The total required power is at least power that needs to be outputted when the power supply circuit 10 supplies power to the first load 410, the second load 420, and the battery module 20.

It may be understood that, the total required power is obtained, and the input power is compared with the total required power, so that whether the electric energy currently obtained by the power supply circuit 10 is sufficient to supply power to the first load 410, the second load 420, and the battery module 20 may be determined.

Step S930: Determine operating modes of a DC/DC conversion module, a first AC/DC module, and a second AC/DC module based on the input power, the first required power, the second required power, the minimum charging power, and the total required power.

Specifically, step S930 may further include the following steps.

When the second terminal P2 of the alternating current input interface 104 is connected to the neutral wire terminal N1 of the second end of the first AC/DC conversion module 102 and the neutral wire terminal N2 of the second end of the second AC/DC conversion module 103, the first terminal P1 of the alternating current input interface 104 has an alternating current input, and the corresponding input power is less than or equal to the total required power, both the first AC/DC conversion module 102 and the second AC/DC conversion module 103 are controlled to operate in the inversion mode, and the DC/DC conversion module 101 is controlled to operate in the discharging mode(for details, refer to specific content of the foregoing embodiment shown in FIG. 2, and details are not described herein again).

When the second terminal P2 of the alternating current input interface 104 is connected to the neutral wire terminal N1 of the second end of the first AC/DC conversion module 102 and the neutral wire terminal N2 of the second end of the second AC/DC conversion module 103, the first terminal P1 of the alternating current input interface 104 has an alternating current input, and the corresponding input power is greater than the total required power, the first AC/DC conversion module 102 is controlled to operate in the rectification mode, the second AC/DC conversion module 103 is controlled to operate in the inversion mode, and the DC/DC conversion module 101 is controlled to operate in the charging mode (for details, refer to specific content of the foregoing embodiment shown in FIG. 3, and details are not described herein again).

When the second terminal P2 of the alternating current input interface 104 is connected to the live wire terminal L4 of the second alternating current output interface 106 and the live wire terminal L2 of the second end of the second AC/DC conversion module 103, and both the first terminal P1 and the second terminal P2 of the alternating current input interface 104 have the alternating current input, if input power of the first terminal P1 is less than a sum of the first required power and the minimum charging power, or input power of the second terminal P2 is less than a sum of the second required power and the minimum charging power, both the first AC/DC conversion module 102 and the second AC/DC conversion module 103 is controlled to operate in the inversion mode, and the DC/DC conversion module 101 is controlled to operate in the discharging mode (for details, refer to specific content of the foregoing embodiment shown in FIG. 5, and details are not described herein again).

When the second terminal P2 of the alternating current input interface 104 is connected to the live wire terminal L4 of the second alternating current output interface 106 and the live wire terminal L2 of the second end of the second AC/DC conversion module 103, and both the first terminal P1 and the second terminal P2 of the alternating current input interface 104 have the alternating current input, if input power of the first terminal P1 is greater than a sum of the first required power and the minimum charging power, and input power of the second terminal P2 is greater than a sum of the second required power and the minimum charging power, both the first AC/DC conversion module 102 and the second AC/DC conversion module 103 are controlled to operate in the rectification mode, and the DC/DC conversion module 101 is controlled to operate in the charging mode (for details, refer to specific content of the foregoing embodiment shown in FIG. 6, and details are not described herein again).

When it is detected that the alternating current power supply 30 is powered off, both the first AC/DC conversion module 102 and the second AC/DC conversion module 103 are controlled to operate in the inversion mode, and the DC/DC conversion module 101 is controlled to operate in the discharging mode (for details, refer to specific content of the foregoing embodiment shown in FIG. 3 and FIG. 7, and details are not described herein again).

Referring to FIG. 10, an embodiment of this application further provides an energy storage device 200. The energy storage device 200 includes the battery module 20 and the power supply circuit 10 according to any one of the foregoing embodiments. In this way, the energy storage device 200 provided with the power supply circuit 10 not only can charge the battery module 20 through the power supply circuit 10, but also can provide an online UPS interface and a backup UPS interface for a user to select through the power supply circuit 10, so that not only power consumption requirements in different scenarios can be satisfied, but also circuit costs are low.

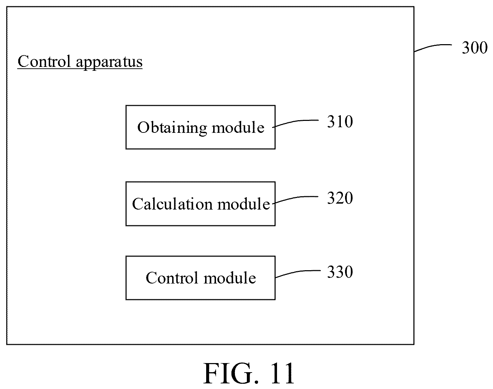

An implementation of this application further provides a control apparatus, used in the power supply circuit 10. FIG. 11 is a schematic structural block diagram of a control apparatus 300 according to an embodiment of this application. As shown in FIG. 11, the control apparatus 300 includes:
an obtaining module 310, configured to obtain input power of an alternating current input interface, first required power of a first load, second required power of a second load, and minimum charging power of a battery module;
a calculation module 320, configured to calculate total required power based on the first required power, the second required power, and the minimum charging power; and
a control module 330, configured to determine operating modes of a DC/DC conversion module, a first AC/DC module, and a second AC/DC module based on the input power, the first required power, the second required power, the minimum charging power, and the total required power.

Specific details of the method for controlling a power supply circuit 10 implemented by the control apparatus 300 provided in the embodiments of this application are described in detail in the corresponding embodiments of the power supply circuit. Details are not described herein again.

This application further provides a computer-readable medium, the computer-readable medium storing a computer program, and the computer program implementing the method for controlling a power supply circuit according to the foregoing technical solutions when being executed by a processor. The computer-readable medium may use a portable compact disc read-only memory (CD-ROM), include program code, and may be run on a terminal device such as a personal computer. However, the program product of the present invention is not limited thereto. In this specification, the readable storage medium may be any tangible medium that includes or stores the program. The program may be used by or in combination with an instructing execution system, apparatus, or device.

The program product may use any combination of one or more readable media. The readable medium may be a readable signal medium or a readable storage medium. The readable storage medium may be, for example, but not limited to, an electrical, magnetic, optical, electromagnetic, infrared, or a semiconductor system, apparatus, or device, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

In addition, the foregoing accompanying drawings are merely exemplary descriptions of processing included in the method according to an exemplary embodiment of the present invention, and are not intended for limitation. For ease of understanding, the process shown in the foregoing accompanying drawings does not indicate or limit a time sequence of the process. In addition, for ease of understanding, these processes may be, for example, synchronously or asynchronously performed in a plurality of modules.

The foregoing are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A power supply circuit, wherein the power supply circuit comprises a DC/DC conversion module, a first AC/DC conversion module, a second AC/DC conversion module, an alternating current input interface, a first alternating current output interface, and a second alternating current output interface;
the alternating current input interface is configured to be connected to an alternating current power supply, both the first alternating current output interface and the second alternating current output interface are configured to be connected to an alternating current load, a first end of the DC/DC conversion module is configured to be connected to a battery module, a second end of the DC/DC conversion module is connected to a first end of the first AC/DC conversion module through a direct current bus, a first end of the second AC/DC conversion module is further connected to the first end of the first AC/DC conversion module through the direct current bus, a neutral wire terminal of a second end of the first AC/DC conversion module is connected to a neutral wire terminal of a second end of the second AC/DC conversion module, a first terminal of the alternating current input interface is connected to a live wire terminal of the second end of the first AC/DC conversion module and a live wire terminal of the first alternating current output interface, and a live wire terminal of the second alternating current output interface is connected to a live wire terminal of the second end of the second AC/DC conversion module;
a second terminal of the alternating current input interface is connected to the neutral wire terminal of the second end of the first AC/DC conversion module and the neutral wire terminal of the second end of the second AC/DC conversion module, or the second terminal of the alternating current input interface is connected to the live wire terminal of the second alternating current output interface and the live wire terminal of the second end of the second AC/DC conversion module;
the first AC/DC conversion module is configured to: in a rectification mode, convert an alternating current provided by the alternating current power supply into a direct current, and then output the direct current to the direct current bus; or in an inversion mode, convert a direct current on the direct current bus into an alternating current, and then supply power to the outside through the first alternating current output interface;
the DC/DC conversion module is configured to: in a charging mode, perform voltage conversion on the direct current on the direct current bus, and then charge the battery module;
or in a discharging mode, perform voltage conversion on a direct current outputted by the battery module, and then output the direct current to the direct current bus; and
the second AC/DC conversion module is configured to: in the inversion mode, convert the direct current on the direct current bus into the alternating current, and then supply power to the outside through the second alternating current output interface; or in the rectification mode, convert an alternating current inputted by the alternating current power supply into the direct current, and then output the direct current to the direct current bus.

2. The power supply circuit according to claim 1, further comprising a control module, wherein the control module is configured to control the first AC/DC conversion module, the second AC/DC conversion module, and the DC/DC conversion module, the alternating current load comprises a first load and a second load, the first alternating current output interface and the second alternating current output interface are respectively connected to the first load and the second load, and the control module is further configured to:
obtain input power of the alternating current input interface, first required power of the first load, second required power of the second load, and minimum charging power of the battery module;
calculate total required power based on the first required power, the second required power, and the minimum charging power; and
when the second terminal of the alternating current input interface is connected to the neutral wire terminal of the second end of the first AC/DC conversion module and the neutral wire terminal of the second end of the second AC/DC conversion module, the first terminal of the alternating current input interface has an alternating current input, and the corresponding input power is greater than the total required power, control the first AC/DC conversion module to operate in the rectification mode, control the second AC/DC conversion module to operate in the inversion mode, and control the DC/DC conversion module to operate in the charging mode.

3. The power supply circuit according to claim 2, wherein the control module is further configured to:
when the second terminal of the alternating current input interface is connected to the neutral wire terminal of the second end of the first AC/DC conversion module and the neutral wire terminal of the second end of the second AC/DC conversion module, the first terminal of the alternating current input interface has the alternating current input, and the corresponding input power is less than or equal to the total required power, control both the first AC/DC conversion module and the second AC/DC conversion module to operate in the inversion mode, and control the DC/DC conversion module to operate in the discharging mode.

4. The power supply circuit according to claim 2, wherein the control module is further configured to:
when the second terminal of the alternating current input interface is connected to the live wire terminal of the second alternating current output interface and the live wire terminal of the second end of the second AC/DC conversion module, and both the first terminal and the second terminal of the alternating current input interface have the alternating current input, if input power of the first terminal is greater than a sum of the first required power and the minimum charging power, and input power of the second terminal is greater than a sum of the second required power and the minimum charging power, control both the first AC/DC conversion module and the second AC/DC conversion module to operate in the rectification mode, and control the DC/DC conversion module to operate in the charging mode.

5. The power supply circuit according to claim 4, further comprising a bus capacitor module and a midpoint balance circuit module, wherein the bus capacitor module comprises a first bus capacitor and a second bus capacitor, the first bus capacitor and the second bus capacitor are connected in series to the direct current bus, midpoints of the first bus capacitor and the second bus capacitor are further connected to a neutral wire terminal of the first alternating current output interface and a neutral wire terminal of the second alternating current output interface, and the midpoint balance circuit module is configured to maintain midpoint voltage balance of the bus capacitor module.

6. The power supply circuit according to claim 2, wherein the control module is further configured to:
when the second terminal of the alternating current input interface is connected to the live wire terminal of the second alternating current output interface and the live wire terminal of the second end of the second AC/DC conversion module, and both the first terminal and the second terminal of the alternating current input interface have the alternating current input, if input power of the first terminal is less than a sum of the first required power and the minimum charging power, or input power of the second terminal is less than a sum of the second required power and the minimum charging power, control both the first AC/DC conversion module and the second AC/DC conversion module to operate in the inversion mode, and control the DC/DC conversion module to operate in the discharging mode.

7. The power supply circuit according to claim 2, wherein the power supply circuit further comprises a third alternating current output interface, a first live wire terminal of the third alternating current output interface is connected to the first terminal of the alternating current input interface, a second live wire terminal of the third alternating current output interface is connected to the second terminal of the alternating current input interface, a neutral wire terminal of the third alternating current output interface is connected to the neutral wire terminal of the second end of the first AC/DC conversion module, and a ground terminal of the third alternating current output interface is connected to the ground.

8. The power supply circuit according to claim 2, wherein the control module is further configured to:
when it is detected that the alternating current power supply is powered off, control both the first AC/DC conversion module and the second AC/DC conversion module to operate in the inversion mode, and control the DC/DC conversion module to operate in the discharging mode.

9. The power supply circuit according to claim 5, wherein the power supply circuit further comprises a switch module, the switch module comprises a first switch, a second switch, and a third switch, and the control module is further configured to separately control the first switch, the second switch, and the third switch to be turned on and turned off, wherein
the first terminal of the alternating current input interface is connected to the live wire terminal of the second end of the first AC/DC conversion module and the live wire terminal of the first alternating current output interface through the first switch;
the second terminal of the alternating current input interface is connected to the neutral wire terminal of the first alternating current output interface, the neutral wire terminal of the second alternating current output interface, the neutral wire terminal of the second end of the first AC/DC conversion module, and the neutral wire terminal of the second end of the second AC/DC conversion module through the second switch; and
the second terminal of the alternating current input interface is further connected to the live wire terminal of the second end of the second AC/DC conversion module and the live wire terminal of the second alternating current output interface through the third switch.

10. An energy storage device, comprising a battery module and the power supply circuit according to any one of claims 1 to 9.
